# EUROPÄISCHE PATENTSCHRIFT

(11) **EP 3 301 271 B1**
(45) Veröffentlichungstag und Bekanntmachung des Hinweises auf die Patenterteilung: **27.02.2019**
(21) Anmeldenummer: 17183745.3
(22) Anmeldetag: 28.07.2017
(51) Int. Cl.: F01N 3/20

(54) **VERFAHREN ZUM ENTLEEREN EINER ABGASNACHBEHANDLUNGSVORRICHTUNG**
METHOD FOR PURGING AN EXHAUST GAS AFTERTREATMENT DEVICE
PROCÉDÉ DE PURGE D'UN SYSTÈME DE POST-TRAITEMENT DES GAZ D'ÉCHAPPEMENT

(30) Priorität: 28.09.2016 DE 102016218710
(43) Veröffentlichungstag der Anmeldung: 04.04.2018
(73) Patentinhaber: Bayerische Motoren Werke Aktiengesellschaft, 80809 München (DE)
(72) Erfinder: Hesselmann, Christoph, 83569 Vogtareuth (DE); Huebl, Manfred, 4591 Molln (AT)

(56) Entgegenhaltungen:
- WO-A2-2008/045499
- DE-A1-102010 031 651
- DE-A1-102012 018 408
- US-A1- 2010 319 324
- US-A1- 2015 275 730

## Beschreibung

Die Erfindung betrifft ein Verfahren zum Entleeren einer Abgasnachbehandlungsvorrichtung.

Abgasnachbehandlungsvorrichtung dienen der Reinigung von Abgasen, z.B. von Abgasen von Verbrennungsmotoren von Kraftfahrzeugen, u.a. mittels selektiver katalytischer Reduktion. Unter selektiver katalytischer Reduktion (englisch selective catalytic reduction, SCR) wird die Reduktion von Stickoxiden (NOx) in Abgasen u.a. Verbrennungsmotoren von Kraftfahrzeugen verstanden. Die chemische Reaktion an einem SCR-Katalysator ist selektiv, d.h., dass bevorzugt die Stickoxide reduziert werden, während unerwünschte Nebenreaktionen wie die Oxidation von Schwefeldioxid zu Schwefeltrioxid weitgehend unterdrückt werden. Für die Reaktion wird Ammoniak (NH₃) benötigt, das dem Abgas zugemischt wird. Die Produkte der Reaktion sind Wasser (H₂O) und Stickstoff (N₂).

Das für die SCR-Reaktion benötigte Ammoniak wird nicht direkt, d.h. in reiner Form, verwendet, sondern aus der Reaktion einer 32,5-prozentigen, wässrigen Harnstofflösung (AdBlue) gewonnen. Die Zusammensetzung ist in ISO 22241-1 geregelt. Diese wässrige Lösung wird vor dem SCR-Katalysator in den Abgasstrang, z.B. mittels eines Injektors, eingesprüht. Aus der Harnstoff-WasserLösung entstehen durch eine Hydrolysereaktion Ammoniak und Kohlendioxid. Das so erzeugte Ammoniak kann in dem SCR-Katalysator bei entsprechender Temperatur mit den Stickoxiden im Abgas reagieren.

Eine weiter Reduzierung von Stickoxidemissionen kann mit einem SCR System erreicht werden, dass zwei Einspritzeinerichtungen aufweist, von denen eine erste motornah und eine zweite Einspritzeinrichtung in Strömungsrichtung der Abgase weiter entfernt von dem Verbrennungsmotor im Unterboden des Kraftfahrzeugs angeordnet ist. Mit anderen Worten, die beiden Einspritzeinrichtung in Strömungsrichtung eines Abgasstromes beabstandet hintereinander angeordnet.

Die hierzu verwendeten Harnstofflösungen weisen einen Gefrierpunkt von z.B. -11°c auf. Um eine Beschädigung der Einspritzvorrichtungen durch Eisdruck beim Gefrieren zu verhindern ist es vorgesehen, nach jedem Fahrzyklus einen Rücksaugvorgang durchzuführen, bei dem die Harnstofflösung aus den Einspritzeinrichtungen entfernt wird.

Sind jedoch beide Einspritzeinrichtungen über ein Y-Stück mit einer Pumpe verbunden, die für einen Rücksaugvorgang Unterdruck erzeugt, besteht die Gefahr, dass nur die Einspritzeinrichtung mit dem geringeren hydraulischen Widerstand geleert wird, während in der anderen Harnstofflösungsreste verbleiben. Somit ist es schwierig, bei einem SCR System mit zwei Einspritzeinerichtungen einen definierten Rücksaugvorgang zu gewährleisten. Es ist zwar möglich, jeder Einspritzeinrichtung eine Pumpe zuzuordnen. Allerdings wäre dies aufwändig und teuer.

Aus der US 2015/275730 A1 ist eine Abgasnachbehandlungsvorrichtung zum Behandeln von Abgasen eines Verbrennungsmotors bekannt, wobei die Abgasnachbehandlungsvorrichtung zumindest eine erste Einspritzeinrichtung und eine zweite Einspritzeinrichtung jeweils zum Einspritzen einer ammoniakenthaltenden Lösung zur Reduktion von im Abgas enthaltenden Stickoxiden aufweist, wobei die zweite Einspritzeinrichtung in Strömungsrichtung der Abgase stromab der ersten Einspritzeinrichtung angeordnet ist.

Es ist daher Aufgabe der Erfindung, Wege aufzuzeigen, wie mit geringem Aufwand ein definierter Rücksaugvorgang gewährleistet werden kann, so dass keine Harnstofflösungsreste in beiden Einspritzeinrichtungen verbleiben.

Die Aufgabe der Erfindung wird gelöst durch ein Verfahren zum Entleeren einer Abgasnachbehandlungsvorrichtung zum Behandeln von Abgasen eines Verbrennungsmotors, wobei die Abgasnachbehandlungsvorrichtung zumindest eine erste Einspritzeinrichtung und eine zweite Einspritzeinrichtung jeweils zum Einspritzen einer ammoniakenthaltenden Lösung zur Reduktion von im Abgas enthaltenden Stickoxiden aufweist, wobei die zweite Einspritzeinrichtung in Strömungsrichtung der Abgase stromab von der ersten Einspritzeinrichtung angeordnet ist, wobei eine Versorgungsleitung der Abgasnachbehandlungsvorrichtung die erste Einspritzeinrichtung und die zweite Einspritzeinrichtung zum Zuführen von der ammoniakenthaltenden Lösung zu der ersten Einspritzeinrichtung und der zweiten Einspritzeinrichtung in Reihe miteinander verbindet, wobei in einem ersten Schritt Unterdruck in der Versorgungsleitung erzeugt wird, und wobei einem zweiten Schritt eine der beiden Einspritzeinrichtungen geöffnet wird.

Durch die Abkehr von einer Verbindung der beiden Einspritzeinrichtungen mit einem Y-Stück in der Versorgungsleitung wird sichergestellt, das beide Zweige des Y-Stück im Falle einer Verstopfung oder eines größeren hydraulischen Widerstandes in einem der beiden Zweige des Y-Stücks zuverlässig geleert werden und somit harnstofflösungsrestefrei sind, da durch die Anordnung der ersten und zweiten Einspritzeinrichtung in Reihe kein alternativer Strömungspfad wie bei einem Y-Stück mehr gegeben ist. So kann mit geringem Aufwand ein definierter Rücksaugvorgang gewährleistet werden, so dass keine Harnstofflösungsreste in einer der Einspritzeinrichtung verbleiben.

Bevorzugt ist vorgesehen, dass in einem zweiten Schritt die andere Einspritzvorrichtung geschlossen bleibt. So liegt der von einer Pumpe erzeugte Unterdruck an einer der beiden Einspritzeinrichtungen an und erlaubt so eine Entfernung von Verstopfungen. So kann die Zuverlässigkeit des Rücksaugvorgangs nochmals gesteigert werden.

Bevorzugt ist vorgesehen, dass in dem zweiten Schritt die Einspritzeinrichtung geöffnet wird, die in Saugrichtung der ammoniakenthaltenden Lösung bei Unterdruck von einer in der Versorgungsleitung Unterdruck erzeugenden Pumpe weiter entfernt ist als die andere Einspritzeinrichtung. So wird zuerst dieser Abschnitt der Versorgungsleitung von Harnstoffresten befreit.

Bevorzugt ist vorgesehen, dass in einem dritten Schritt die Einspritzeinrichtung geöffnet wird, die in Saugrichtung der ammoniakenthaltenden Lösung bei Unterdruck in der Versorgungsleitung näher an der Pumpe ist. So wird dem dritten Schritt auch dieser Abschnitt der Versorgungsleitung von Harnstoffresten befreit.

Bevorzugt ist vorgesehen, dass in dem dritten Schritt die Einspritzeinrichtung (geschlossen gehalten wird, die in Saugrichtung der ammoniakenthaltenden Lösung bei Unterdruck in der Versorgungsleitung von der Pumpe weiter entfernt ist. Es wird also nun die andere Einspritzrichtung mit dem vollen Unterdruck der Pumpe beaufschlagt, so dass auch dieser Abschnitt von Harnstoffresten befreit wird.

Ferner gehört zur Erfindung eine Abgasnachbehandlungsvorrichtung, die dazu ausgebildet ist, ein derartiges Verfahren durchzuführen.

Es wird nun die Erfindung unter Bezugnahme auf eine Zeichnung erläutert. Es zeigt:
Fig. 1 in schematischer Darstellung ein Ausführungsbeispiel einer Abgasnachbehandlungsvorrichtung, und
Fig. 2 in schematischer Darstellung ein Ablaufdiagramm eines Verfahrens zum Betrieb einer derartigen Abgasnachbehandlungsvorrichtung.

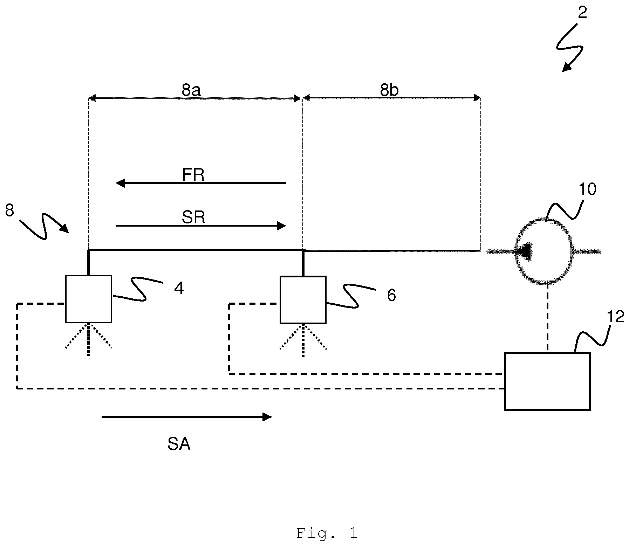

Es wird zunächst auf Fig. 1 Bezug genommen.

Dargestellt in ist eine Abgasnachbehandlungsvorrichtung 2 zum Behandeln von Abgasen eines Verbrennungsmotors, wie z.B. eines Dieselmotors zum Antrieb eines Kraftfahrzeugs, wie z.B. eines PKWs, mittels katalytischer Reduktion.

Die Abgasnachbehandlungsvorrichtung 2 weist eine erste Einspritzeinrichtung 4 und eine zweite Einspritzeinrichtung 6 auf. Dabei ist die zweite Einspritzeinrichtung 6 in Strömungsrichtung SA der Abgase stromab der ersten Einspritzeinrichtung 4 angeordnet. Im vorliegenden Ausführungsbeispiel ist erste Einspritzeinrichtung 4 motornah und eine zweite Einspritzeinrichtung 6 ist im Unterboden des Kraftfahrzeugs angeordnet. Abweichend vom vorliegenden Ausführungsbeispiel können die erste Einspritzeinrichtung 4 und die zweite Einspritzeinrichtung 6 im Unterboden des Kraftfahrzeugs angeordnet sein. Ferner kann abweichend vom vorliegenden Ausführungsbeispiel die Abgasnachbehandlungsvorrichtung 2 weitere Einspritzeinrichtung, wie z.B. eine dritte, vierte, fünfte usw. Einspritzeinrichtung aufweisen, die in Strömungsrichtung SA in Reihe zu der ersten Einspritzeinrichtung 4 und der zweiten Einspritzeinrichtung 6 angeordnet sind.

Beide Einspritzeinrichtungen 4, 6 sind jeweils dazu ausgebildet, eine ammoniakenthaltenden Lösung, im vorliegenden Ausführungsbeispiel AdBlue, in den Abgasstrom einzuspritzen, um eine Reduktion von im Abgas enthaltenden Stickoxiden zu erreichen.

Ferner ist die Abgasnachbehandlungsvorrichtung 2 im vorliegenden Ausführungsbeispiel dazu ausgebildet, durch einen Rücksaugvorgang Harnstoffreste aus den beiden Einspritzeinrichtungen 4, 6 zu entfernen. Hierzu weist die Abgasnachbehandlungsvorrichtung 4 eine Pumpe 10 auf, mit der im Normalbetrieb die ammoniakenthaltenden Lösung aus einem Vorratstank (nicht dargestellt) in Förderrichtung FR zu den beiden Einspritzeinrichtung 4, 6 durch eine Versorgungsleitung 8 gefördert werden kann. Dabei weist die Versorgungsleitung 8 einen ersten Versorgungsleitungsabschnitt 8a und einen zweiten Versorgungsleitungsabschnitt 8b auf, wobei der erste Versorgungsleitungsabschnitt 8a sich von der ersten Einspritzeinrichtung 4 bis zur zweiten Einspritzeinrichtung 6 und der zweite Versorgungsleitungsabschnitt 8b sich von der Einspritzeinrichtung 6 bis zur Pumpe 10 erstreckt. Mit anderen Worten, im vorliegenden Ausführungsbeispiel ist die zweite Einspritzeinrichtung 6 zwischen der ersten Einspritzeinrichtung 4 und der Pumpe 10 angeordnet.

Während des Rücksaugvorgangs wird die Pumpe 10 von einem Steuergerät 12 der Abgasnachbehandlungsvorrichtung 2 invers betrieben, d.h. die Pumpe 10 erzeugt einen Unterdruck in der Versorgungsleitung 8 und damit auch in den beiden Einspritzeinrichtungen 4, 6. Ferner steuert - wie dies noch detailliert beschreiben wird - das Steuergerät 12 die beiden Einspritzeinrichtungen 4, 6 derart an, dass deren Injektorventile (nicht dargestellt) nacheinander öffnen, um so zuerst den ersten Versorgungsleitungsabschnitt 8a und dann den zweiten Versorgungsleitungsabschnitt 8b der Versorgungsleitung 8 sowie deren zugeordnete Einspritzeinrichtung 4, 6 mit deren jeweiligen Injektorventile zu entleeren.

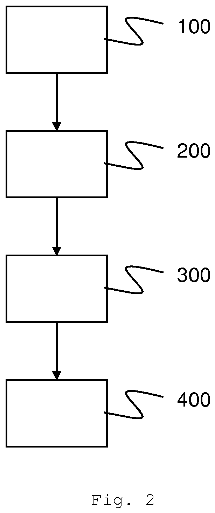

Es wird nun unter zusätzlicher Bezugnahme auf die Fig. 2 ein Verfahrenablauf beim Betrieb der Abgasnachbehandlungsvorrichtung 2 erläutert.

Das Verfahren beginnt mit einem ersten Schritt 100, bei dem das Steuergerät 12 auf das Erfassen eines Endes eines Fahrzyklus hin einen Rücksaugvorgang durch ein Ansteuern der Pumpe 10 bewirkt, dass die Pumpe 10 invers betrieben wird und so Unterdruck in der Versorgungsleitung 8 erzeugt.

Nach Ablauf einer vorbestimmten Zeitdauer wird das Verfahren mit einem zweiten Schritt 200 fortgesetzt.

In einem ersten Teilschritt des zweiten Schritts 200 steuert dann das Steuergerät 12 die erste Einspritzeinrichtung 4 an, um deren Injektorventil zu öffnen, wobei die erste Einspritzeinrichtung 4 bei von der Pumpe 10 in der Versorgungsleitung 8 erzeugten Unterdruck in Saugrichtung SR von der Pumpe 10 weiter entfernt ist als die zweite Einspritzeinrichtung 6.

Zugleich steuert das Steuergerät 12 in einem zweiten Teilschritt des zweiten Schritts 200 die zweite Einspritzeinrichtung 6 an, um deren Injektorventil zu schließen. Somit steht der volle von der Pumpe 10 im inversen Betrieb bereitgestellte Unterdruck an der ersten Einspritzeinrichtung 4 an und bewirkt einen harnstofflösungsrestfreien Rücksaugvorgang des ersten Versorgungsleitungsabschnitts 8a und des zweiten Versorgungsleitungsabschnitts 8b der Versorgungsleitung 8.

Nach Ablauf einer vorbestimmten Zeitdauer wird das Verfahren mit einem dritten Schritt 300 fortgesetzt.

In einem ersten Teilschritt des dritten Schritts 300 steuert das Steuergerät 12 die zweite Einspritzeinrichtung 6 an, um deren Injektorventil zu öffnen. Ferner steuert das Steuergerät 12 in einem zweiten Teilschritt des dritten Schritts 300 die erste Einspritzeinrichtung 4 an, um deren Injektorventil zu schließen. Mit anderen Worten, es wird nun die zweite Einspritzeinrichtung 6 geöffnet, die in Saugrichtung SR der ammoniakenthaltenden Lösung bei Unterdruck näher an der Pumpe 10 ist als die erste Einspritzeinrichtung 4.

Somit steht der volle von der Pumpe 10 im inversen Betrieb bereitgestellte Unterdruck an der zweiten Einspritzeinrichtung 6 an und bewirkt einen harnstofflösungsrestfreien Rücksaugvorgang des zweiten Versorgungsleitungsabschnitts 8b der Versorgungsleitung 8.

Nach Ablauf einer vorbestimmten Zeitdauer wird das Verfahren mit einem vierten Schritt 400 fortgesetzt.

In dem vierten Schritt steuert das Steuergerät 12 die zweite Einspritzeinrichtung 6 an, um deren Injektorventil zu schließen und beendet den inversen Betrieb der Pumpe 10.

So sind mit dem Abschluss des Verfahrens mit dem vierten Schritt 400 der erste Versorgungsleitungsabschnitt 8a und der zweite Versorgungsleitungsabschnitt 8b der Versorgungsleitung 8 frei von Harnstofflösungsresten. Eine Beschädigung der beiden Einspritzvorrichtungen 4, 6 durch Eisdruck wird so zuverlässig verhindert.

Abweichend vom vorliegenden Ausführungsbeispiel kann die Reihenfolge der Schritte auch eine andere sein. Z.B. kann der dritte Schritt 300 vor dem zweiten Schritt 200 durchgeführt, werden, und/oder die Reihenfolge der jeweiligen Teilschritte des zweiten Schritts 200 und/oder des dritten Schritts 300 kann eine andere sein oder die jeweiligen Teilschritte des zweiten Schritts 200 und/oder des dritten Schritts 300 können auch zeitgleich ausgeführt werden.

Ferner kann abweichend vom vorliegenden Ausführungsbeispiel die Abgasnachbehandlungsvorrichtung 2 weitere Einspritzeinrichtung, wie z.B. eine dritte, vierte, fünfte usw. Einspritzeinrichtung aufweisen, die in Strömungsrichtung SA in Reihe zu der ersten Einspritzeinrichtung 4 und der zweiten Einspritzeinrichtung 6 angeordnet sind. In diesem Fall weist das erweiterte Verfahren für jede der weiteren Einspritzeinrichtungen einen zusätzlichen Schritt auf, bei das Steuergerät 12 zuerst die jeweilige vorherige Einspritzeinrichtung ansteuert, um deren Injektorventil zu schließen, um anschließend die jeweilige weitere Einspritzeinrichtung zu öffnen, die in Saugrichtung SR der ammoniakenthaltenden Lösung bei Unterdruck näher an der Pumpe 10 ist als die jeweilige vorherige erste Einspritzeinrichtung.

So kann mit geringem Aufwand ein definierter Rücksaugvorgang gewährleistet werden, so dass keine Harnstofflösungsreste in einer der Einspritzeinrichtungen 4, 6 verbleiben.

### Bezugszeichenliste

- 2: Abgasnachbehandlungsvorrichtung
- 4: Einspritzeinrichtung
- 6: Einspritzeinrichtung
- 8: Versorgungsleitung
- 8a: Versorgungsleitungsabschnitt
- 8b: Versorgungsleitungsabschnitt
- 10: Pumpe
- 12: Steuergerät

- FR: Förderrichtung
- SA: Strömungsrichtung
- SR: Saugrichtung

## Patentansprüche

1. Verfahren zum Entleeren einer Abgasnachbehandlungsvorrichtung (2) zum Behandeln von Abgasen eines Verbrennungsmotors, wobei die Abgasnachbehandlungsvorrichtung (2) zumindest eine erste Einspritzeinrichtung (4) und eine zweite Einspritzeinrichtung (6) jeweils zum Einspritzen einer ammoniakenthaltenden Lösung zur Reduktion von im Abgas enthaltenden Stickoxiden aufweist, wobei die zweite Einspritzeinrichtung (6) in Strömungsrichtung (SA) der Abgase stromab von der ersten Einspritzeinrichtung (4) angeordnet ist, wobei eine Versorgungsleitung (8) der Abgasnachbehandlungsvorrichtung (2) die erste Einspritzeinrichtung (4) und die zweite Einspritzeinrichtung (6) zum Zuführen von der ammoniakenthaltenden Lösung zu der ersten Einspritzeinrichtung (4) und der zweiten Einspritzeinrichtung (6) in Reihe miteinander verbindet, wobei in einem ersten Schritt (100) Unterdruck in der Versorgungsleitung (8) erzeugt wird, und wobei einem zweiten Schritt (200) eine der beiden Einspritzeinrichtungen (4, 6) geöffnet wird.

2. Verfahren nach Anspruch 1, wobei in dem zweiten Schritt (200) die andere Einspritzvorrichtung (4, 6) geschlossen gehalten wird.

3. Verfahren nach Anspruch 2, wobei in dem zweiten Schritt (200) die Einspritzeinrichtung (4, 6) geöffnet wird, die in Saugrichtung (SR) der ammoniakenthaltenden Lösung bei Unterdruck von einer in der Versorgungsleitung (8) Unterdruck erzeugenden Pumpe (10) weiter entfernt ist als die andere Einspritzeinrichtung (4, 6).

4. Verfahren nach Anspruch 3, wobei in einem dritten Schritt (300) die Einspritzeinrichtung (4, 6) geöffnet wird, die in Saugrichtung (SR) der ammoniakenthaltenden Lösung bei Unterdruck in der Versorgungsleitung (8) näher an der Pumpe (10) ist.

5. Verfahren nach Anspruch 4, wobei in dem dritten Schritt (300) die Einspritzeinrichtung (4, 6) geschlossen gehalten wird, die in Saugrichtung (SR) der ammoniakenthaltenden Lösung bei Unterdruck in der Versorgungsleitung (8) von der Pumpe (10) weiter entfernt ist.

6. Abgasnachbehandlungsvorrichtung (2) zum Behandeln von Abgasen eines Verbrennungsmotors, wobei die Abgasnachbehandlungsvorrichtung (2) zumindest eine erste Einspritzeinrichtung (4) und eine zweite Einspritzeinrichtung (6) jeweils zum Einspritzen einer ammoniakenthaltenden Lösung zur Reduktion von im Abgas enthaltenden Stickoxiden aufweist, wobei die zweite Einspritzeinrichtung (6) in Strömungsrichtung (SR) der Abgase stromab der ersten Einspritzeinrichtung (4) angeordnet ist, dadurch gekennezichent, dass eine Versorgungsleitung (8) der Abgasnachbehandlungsvorrichtung (2)die erste Einspritzeinrichtung (4) und die zweite Einspritzeinrichtung (6) zum Zuführen von der ammoniakenthaltenden Lösung zu der ersten Einspritzeinrichtung (4) und der zweiten Einspritzeinrichtung (6) in Reihe miteinander verbindet, wobei die Abgasnachbehandlungsvorrichtung (2) dazu ausgebildet ist, Unterdruck in der Versorgungsleitung (8) zu erzeugen, und eine der beiden Einspritzeinrichtungen (4, 6) zu öffnen.

7. Abgasnachbehandlungsvorrichtung (2) nach Anspruch 6, wobei die Abgasnachbehandlungsvorrichtung (2) dazu ausgebildet ist, die andere Einspritzvorrichtung (4, 6) geschlossen zu halten.

8. Abgasnachbehandlungsvorrichtung (2) nach Anspruch 7, wobei die Abgasnachbehandlungsvorrichtung (2) dazu ausgebildet ist, die Einspritzeinrichtung (4, 6) zu öffnen, die in Saugrichtung (SR) der ammoniakenthaltenden Lösung bei Unterdruck in der Versorgungsleitung (8) von einer den Unterdruck in der Versorgungsleitung (8) erzeugenden Pumpe (10) weiter entfernt ist als die andere Einspritzeinrichtung (4, 6).

9. Abgasnachbehandlungsvorrichtung (2) nach Anspruch 8, wobei die Abgasnachbehandlungsvorrichtung (2) dazu ausgebildet ist, die Einspritzeinrichtung (4, 6) zu öffnen, die in Saugrichtung (SR) der ammoniakenthaltenden Lösung bei Unterdruck in der Versorgungsleitung (8) näher an der Pumpe (10) ist.

10. Abgasnachbehandlungsvorrichtung (2) nach Anspruch 9, wobei die Abgasnachbehandlungsvorrichtung (2) dazu ausgebildet ist, die Einspritzeinrichtung (4, 6) geschlossen zu halten, die in Saugrichtung der ammoniakenthaltenden Lösung bei Unterdruck in der Versorgungsleitung (8) von der Pumpe (10) weiter entfernt ist.

## Claims

1. A method for emptying an exhaust after-treatment device (2) for treating exhaust gases of an internal combustion engine, wherein the exhaust after-treatment device (2) has at least a first injection means (4) and a second injection means (6) in each case for injecting an ammonia-containing solution for reducing nitrogen oxides contained in the exhaust, wherein the second injection means (6) is arranged downstream from the first injection means (4) in the direction of flow (SA) of the exhaust gases, wherein a supply line (8) of the exhaust after-treatment device (2) connects the first injection means (4) and the second injection means (6) together in series for supplying the ammonia-containing solution to the first injection means (4) and the second injection means (6), wherein in a first step (100) a partial vacuum is generated in the supply line (8), and wherein in a second step (200) one of the two injection means (4, 6) is opened.

2. A method according to Claim 1, wherein in the second step (200) the other injection device (4, 6) is kept closed.

3. A method according to Claim 2, wherein in the second step (200) that injection means (4, 6) is opened which in the direction of suction (SR) of the ammonia-containing solution when a partial vacuum is present is farther removed from a pump (10) which generates a partial vacuum in the supply line (8) than the other injection means (4, 6).

4. A method according to Claim 3, wherein in a third step (300) that injection means (4, 6) is opened which in the direction of suction (SR) of the ammonia-containing solution when a partial vacuum is present in the supply line (8) is closer to the pump (10).

5. A method according to Claim 4, wherein in the third step (300) that injection means (4, 6) is kept closed which in the direction of suction (SR) of the ammonia-containing solution when a partial vacuum is present in the supply line (8) is farther removed from the pump (10).

6. An exhaust after-treatment device (2) for treating exhaust gases of an internal combustion engine, wherein the exhaust after-treatment device (2) has at least a first injection means (4) and a second injection means (6) in each case for injecting an ammonia-containing solution for reducing nitrogen oxides contained in the exhaust, wherein the second injection means (6) is arranged in the direction of flow (SR) of the exhaust gases downstream from the first injection means (4), **characterised in that** a supply line (8) of the exhaust after-treatment device (2) connects the first injection means (4) and the second injection means (6) together in series for supplying the ammonia-containing solution to the first injection means (4) and the second injection means (6), wherein the exhaust after-treatment device (2) is designed to generate a partial vacuum in the supply line (8), and to open one of the two injection means (4, 6).

7. An exhaust after-treatment device (2) according to Claim 6, wherein the exhaust after-treatment device (2) is designed to keep the other injection device (4, 6) closed.

8. An exhaust after-treatment device (2) according to Claim 7, wherein the exhaust after-treatment device (2) is designed to open that injection means (4, 6) which in the direction of suction (SR) of the ammonia-containing solution when a partial vacuum is present in the supply line (8) is farther removed from a pump (10) which generates the partial vacuum in the supply line (8) than the other injection means (4, 6).

9. An exhaust after-treatment device (2) according to Claim 8, wherein the exhaust after-treatment device (2) is designed to open that injection means (4, 6) which in the direction of suction (SR) of the ammonia-containing solution when a partial vacuum is present in the supply line (8) is closer to the pump (10).

10. An exhaust after-treatment device (2) according to Claim 9, wherein the exhaust after-treatment device (2) is designed to keep closed that injection means (4, 6) which in the direction of suction (SR) of the ammonia-containing solution when a partial vacuum is present in the supply line (8) is farther removed from the pump (10).

## Revendications

1. Procédé permettant de vidanger un dispositif de post-traitement (2) des gaz d'échappement d'un moteur à combustion interne,
selon lequel le dispositif de post-traitement des gaz d'échappement (2) comporte au moins un premier dispositif d'injection (4) et un second dispositif d'injection (6) destinés chacun à injecter une solution renfermant de l'ammoniac permettant de réduire les oxydes d'azote renfermés dans les gaz d'échappement, le second dispositif d'injection (6) étant monté en aval du premier dispositif d'injection (4), dans la direction de circulation (SA) des gaz d'échappement une conduite d'alimentation (8) du dispositif de post-traitement des gaz d'échappement (2) reliant en série le premier dispositif d'injection (4) et le second dispositif d'injection (6) pour transférer la solution renfermant de l'ammoniac vers le premier dispositif d'injection (4) et le second dispositif d'injection (6), dans une première étape (100), une dépression étant produite dans la conduite d'alimentation (8) et dans une seconde étape (200), l'un des deux dispositifs d'injection (4, 6) étant ouvert.

2. Procédé conforme à la revendication 1,
selon lequel dans la seconde étape (200), l'autre dispositif d'injection (4, 6) est maintenu fermé.

3. Procédé conforme à la revendication 2,
selon lequel lors de la seconde étape (200) on ouvre le dispositif d'injection (4, 6) qui est, dans la direction d'aspiration (SR) de la solution renfermant de l'ammoniac sous dépression, plus éloigné d'une pompe (10) produisant une dépression dans la conduite d'alimentation (8) que l'autre dispositif d'injection (4, 6).

4. Procédé conforme à la revendication 3,
selon lequel lors d'une troisième étape (300), on ouvre le dispositif d'injection (4, 6) qui est, dans la direction d'aspiration (SR) de la solution renfermant de l'ammoniac, en présence d'une dépression dans la conduite d'alimentation (8) plus proche de la pompe (10).

5. Procédé conforme à la revendication 4,
selon lequel lors de la troisième étape (300), on maintient fermé le dispositif d'injection (4, 6) qui est, dans la direction d'aspiration (SR) de la solution renfermant de l'ammoniac en présence d'une dépression dans la conduite d'alimentation (8) plus éloigné de la pompe (10).

6. Dispositif de post-traitement (2) des gaz d'échappement d'un moteur à combustion interne, comprenant au moins un premier dispositif d'injection (4) et un second dispositif d'injection (6) destinés chacun à injecter une solution renfermant de l'ammoniac pour permettre la réduction des oxydes d'azote renfermés dans les gaz d'échappement, le second dispositif d'injection (6) étant situé en aval du premier dispositif d'injection (4) dans la direction de circulation (SR) des gaz d'échappement,
**caractérisé en ce qu'**
une conduite d'alimentation (8) du dispositif de post-traitement des gaz d'échappement (2) relie en série le premier dispositif d'injection (4) et le second dispositif d'injection (6) pour permettre le transfert de la solution renfermant de l'ammoniac vers le premier dispositif d'injection (4) et vers le second dispositif d'injection (6), le dispositif de post-traitement des gaz d'échappement (2) étant réalisé pour permettre de produire une dépression dans la conduite d'alimentation (8) et pour ouvrir l'un des deux dispositifs d'injection (4, 6).

7. Dispositif de post-traitement de gaz d'échappement (2) conforme à la revendication 6,
réalisé pour permettre de maintenir fermé l'autre dispositif d'injection (4, 6).

8. Dispositif de post-traitement de gaz d'échappement (2) conforme à la revendication 7,
réalisé pour permettre d'ouvrir le dispositif d'injection (4, 6) qui est, dans la direction d'aspiration (SR) de la solution renfermant de l'ammoniac, en présence d'une dépression dans la conduite d'alimentation (8), plus éloigné d'une pompe (10) produisant la dépression dans la conduite d'alimentation (8) que l'autre dispositif d'injection (4, 6).

9. Dispositif de post-traitement de gaz d'échappement (2) conforme à la revendication 8,
réalisé pour permettre d'ouvrir le dispositif d'injection (4, 6), qui est, dans la direction d'aspiration (SR) de la solution renfermant de l'ammoniac, en présence d'une dépression dans la conduite d'alimentation (8) plus proche de la pompe (10).

10. Dispositif de post-traitement de gaz d'échappement (2) conforme à la revendication 9,
réalisé pour maintenir fermé le dispositif d'injection (4, 6) qui est, dans la direction d'aspiration de la solution renfermant de l'ammoniac, en présence d'une dépression dans la conduite d'alimentation (8) plus éloigné de la pompe (10).
